(19) Europäisches Patentamt
European Patent Office
Office européen des brevets

(11) **EP 1 760 300 A1**

(12) **DEMANDE DE BREVET EUROPEEN**

(43) Date de publication:
**07.03.2007 Bulletin 2007/10**

(51) Int Cl.:
*F02D 41/40* *(2006.01)*    *F02D 35/02* *(2006.01)*

(21) Numéro de dépôt: **06300868.4**

(22) Date de dépôt: **09.08.2006**

| | |
|---|---|
| (84) Etats contractants désignés:<br>**AT BE BG CH CY CZ DE DK EE ES FI FR GB GR HU IE IS IT LI LT LU LV MC NL PL PT RO SE SI SK TR**<br>Etats d'extension désignés:<br>**AL BA HR MK YU** | • **Le Negrate, Anthony**<br>**92130, Issy les Moulineaux (FR)**<br>• **Vermonet, Claire**<br>**59000, Lille (FR)**<br>• **Duverger, Thierry**<br>**92350, Le Plessis Robinson (FR)** |
| (30) Priorité: **30.08.2005 FR 0508882** | (74) Mandataire: **Pinchon, Odile**<br>**Peugeot Citroën Automobiles SA**<br>**Propriété Industrielle (LG 081)**<br>**18, Rue des Fauvelles**<br>**92250 La Garenne-Colombes (FR)** |
| (71) Demandeur: **PEUGEOT CITROËN AUTOMOBILES S.A.**<br>**78140 Velizy Villacoublay (FR)** | |
| (72) Inventeurs:<br>• **Gimbres, David**<br>**94510, La Queue en Brie (FR)** | |

(54) **Procédé et système de contrôle du fonctionnement d'un moteur diesel de vèhicule automobile**

(57)     L'invention concerne un système de contrôle du fonctionnement d'un moteur Diesel (10) de véhicule automobile équipé de moyens (12) d'alimentation en carburant des cylindres de celui-ci et de moyens (22) de recirculation des gaz d'échappement en entrée de celui-ci, du type comprenant une chaîne (34, 36) d'acquisition de la pression dans au moins un cylindre du moteur et de l'angle vilebrequin de celui-ci et des moyens (32) de pilotage des moyens (12) d'alimentation en fonction d'une loi prédéterminée d'injection de carburant dans le au moins un cylindre.

     Ce système comprend des moyens (40) de détermination d'une grandeur relative au phasage de la combustion du carburant dans le au moins un cylindre en fonction de la pression et de l'angle vilebrequin acquis et des moyens (46) de correction de la loi d'injection en fonction de la grandeur déterminée afin de maintenir un niveau nominal de bruit de combustion dans le moteur et d'émission de polluants par celui-ci.

FIG.3

EP 1 760 300 A1

**Description**

La présente invention concerne un système de contrôle du fonctionnement d'un moteur Diesel de véhicule automobile équipé de moyens d'alimentation en carburant de ses cylindres, du type comprenant une chaîne d'acquisition de la pression dans au moins un cylindre du moteur et de l'angle vilebrequin de celui-ci et des moyens de pilotage des moyens d'alimentation en fonction d'une loi prédéterminée d'injection de carburant dans le au moins un cylindre.

L'invention concerne également un procédé de contrôle d'un tel moteur.

Pour assurer une émission de polluants et un bruit de combustion minimaux, un moteur Diesel de véhicule automobile est aujourd'hui équipé de moyens de recirculation des gaz d'échappement en entrée de celui-ci (EGR) et d'un système de contrôle de son fonctionnement comprenant une première boucle de commande pilotant les moyens d'alimentation de carburant dans les cylindres du moteur et une seconde boucle de commande pilotant les moyens de recirculation, en fonction du point de fonctionnement du moteur, tel que le régime de rotation de celui-ci et le couple demandé par le conducteur du véhicule.

De manière typique, les boucles de commande se fondent sur des lois de pilotage dont les paramètres sont déterminés en sortie d'usine de manière unique pour l'ensemble des moteurs d'une même catégorie.

Aussi, pour un moteur particulier, le réglage de ces lois en sortie d'usine peut être non satisfaisant du fait de la dispersion des caractéristiques mécaniques et thermodynamiques parmi les moteurs d'une même catégorie. De plus, l'état de fonctionnement des organes du moteur, comme l'état de fonctionnement des moyens de recirculation ou des moyens d'alimentation, varie au cours de la vie du véhicule, du fait par exemple de l'encrassement de la vanne EGR présente dans les moyens de recirculation, de l'encrassement des injecteurs des cylindres, etc...

Aussi, le réglage initial des lois de pilotage dévient peu à peu non satisfaisant ce qui provoque une dégradation de l'émission de polluants par le moteur, tels que des oxydes d'azotes (NOx), des particules de suie et des hydrocarbures imbrûlés, et du bruit de combustion du moteur.

Par ailleurs, de par la sévérité toujours plus accrue des normes antipollution, on observe que les lois actuelles de pilotage ne parviennent pas à assurer de manière satisfaisante les niveaux requis d'émission de polluants et de bruit de combustion lors de transitions rapides dans le fonctionnement du moteur, comme par exemple une demande d'augmentation rapide du couple de la part du conducteur du véhicule.

En effet, les dynamiques des moyens de recirculation sont lentes et la commande de ceux-ci ne parvient pas à suivre de telles transitions. Ainsi, lors de celles-ci, les niveaux requis d'émission de polluants et de bruit de combustion ne sont pas atteints.

Le but de la présente invention est de résoudre le problème susmentionné en proposant un procédé et un système de contrôle du fonctionnement d'un moteur Diesel du type qui maintiennent les niveaux requis d'émission de polluants et de bruit de combustion tout au long de la vie du véhicule, y compris lors de transitions rapides dans le fonctionnement du moteur.

A cet effet, l'invention a pour objet un système de contrôle du fonctionnement d'un moteur Diesel de véhicule automobile équipé de moyens d'alimentation en carburant des cylindres de celui-ci et de moyens de recirculation des gaz d'échappement en entrée de celui-ci, du type comprenant une chaîne d'acquisition de la pression dans au moins un cylindre du moteur et de l'angle vilebrequin de celui-ci et des moyens de pilotage des moyens d'alimentation en fonction d'une loi prédéterminée d'injection de carburant dans le au moins un cylindre, caractérisé en ce qu'il comprend :

- des moyens de détermination d'une grandeur relative au phasage de la combustion du carburant dans le au moins un cylindre en fonction de la pression et de l'angle vilebrequin acquis ; et
- des moyens de correction de la loi d'injection en fonction de la grandeur déterminée afin de maintenir un niveau nominal de bruit de combustion dans le moteur et d'émission de polluants par celui-ci.

Suivant des modes particuliers de réalisation, le système comporte une ou plusieurs des caractéristiques suivantes :

- les moyens de détermination de la grandeur relative au phasage de la combustion sont adaptés pour déterminer un angle vilebrequin du au moins un cylindre correspondant à une fraction prédéterminée de la quantité totale de carburant brûlé par cycle dans celui-ci en fonction de la pression et de l'angle vilebrequin acquis ;
- la fraction prédéterminée est sélectionnée dans le groupe consistant en 5%, 25%, 50%, 75% et 90% de la quantité totale de carburant brûlé par cycle dans le au moins un cylindre ;
- les moyens de détermination de la grandeur relative au phasage de la combustion comprennent des moyens de calcul du dégagement de chaleur provoqué par la combustion du carburant dans le au moins un cylindre en fonction de la pression et de l'angle vilebrequin acquis et des moyens de calcul de la fraction de la quantité totale de carburant brûlé en fonction du dégagement de chaleur calculé ;
- les moyens de détermination de la grandeur relative au phasage de la combustion sont adaptés pour déterminer l'angle vilebrequin du au moins un cylindre correspondant au maximum de chaleur dégagée lors de la combustion du carburant dans le au moins cylindre ;

- les moyens de détermination de la grandeur relative au phasage de la combustion sont adaptés pour déterminer le délai d'auto-inflammation du carburant dans le au moins cylindre ;
- les moyens de détermination de la grandeur relative au phasage de la combustion sont adaptés pour déterminer l'angle vilebrequin du au moins un cylindre correspondant au maximum du gradient de pression dans celui-ci ;
- les moyens de correction de la loi d'injection sont adaptés pour corriger le phasage de l'injection de carburant dans le au moins un cylindre ;
- les moyens de correction de la loi d'injection sont adaptés pour corriger la pression de carburant injecté dans le au moins un cylindre ;
- les moyens de correction comprennent des moyens de délivrance d'une consigne pour ladite grandeur et des moyens d'asservissement de ladite grandeur sur sa consigne ;
- les moyens d'asservissement comprennent des moyens de commande du type proportionnel-intégral-dérivé ;
- les moyens de correction comprennent des moyens de bornage de la correction de la loi d'injection dans une plage prédéterminée de valeurs représentatives d'une émission non dégradée de polluants par le moteur ;
- les moyens de correction comprennent des moyens de bornage de la correction de la loi d'injection dans une plage prédéterminée de valeurs représentatives d'une stabilité non dégradée de la combustion du carburant dans le au moins un cylindre ;
- les moyens de correction comprennent des moyens de modification du débit de carburant injecté dans le au moins un cylindre pour maintenir un rendement optimal de la combustion dans le au moins un cylindre ;
- les moyens de modification du débit comprennent des moyens d'asservissement, sur une consigne prédéterminée, de la pression moyenne indiquée d'au moins une portion parmi une portion à haute pression et une portion à basse pression du cycle du au moins un cylindre ;
- la au moins une portion consiste en les portions à haute pression et à basse pression du cycle du au moins un cylindre ;
- les moyens de modification comprennent des moyens d'incrémentation du débit de carburant injecté dans le cylindre en fonction de la correction déterminée en fonction de l'angle vilebrequin correspondant à la fraction de carburant brûlé.

L'invention a également pour objet un procédé de contrôle du fonctionnement d'un moteur Diesel de véhicule automobile équipé de moyens d'alimentation en carburant de ses cylindres, du type comprenant une étape d'acquisition de la pression dans au moins un cylindre du moteur et de l'angle vilebrequin de celui-ci et une étape de détermination de paramètres de pilotage des moyens d'alimentation en fonction d'une loi prédéterminée d'injection de carburant dans le au moins un cylindre, caractérisé en ce qu'il comprend :

- une étape de détermination d'une grandeur relative au phasage de la combustion du carburant dans le au moins un cylindre en fonction de la pression et de l'angle vilebrequin acquis ; et
- une étape de correction de la loi d'injection en fonction de la grandeur déterminée afin de maintenir un niveau nominal de bruit de combustion dans le moteur et d'émission de polluants par celui-ci.

L'invention sera mieux comprise à la lecture de la description qui va suivre, donnée uniquement à titre d'exemple, et faite en relation avec les dessins annexés, dans lesquels :

- la figure 1 est un graphique illustrant la variation du dégagement de chaleur dans un cylindre d'un moteur Diesel de véhicule automobile entre un taux nominal de recirculation des gaz d'échappement et un taux non nominal de recirculation des gaz d'échappement ;
- la figure 2 est un graphique illustrant comment l'avance d'injection permet d'obtenir un dégagement nominal de chaleur dans le cylindre lorsque le taux de recirculation des gaz d'échappement est non nominal ;
- la figure 3 est une vue schématique d'un système selon l'invention associé à un moteur Diesel de véhicule automobile ; et
- la figure 4 est un organigramme d'un procédé selon l'invention mis en oeuvre par le système de la figure 3.

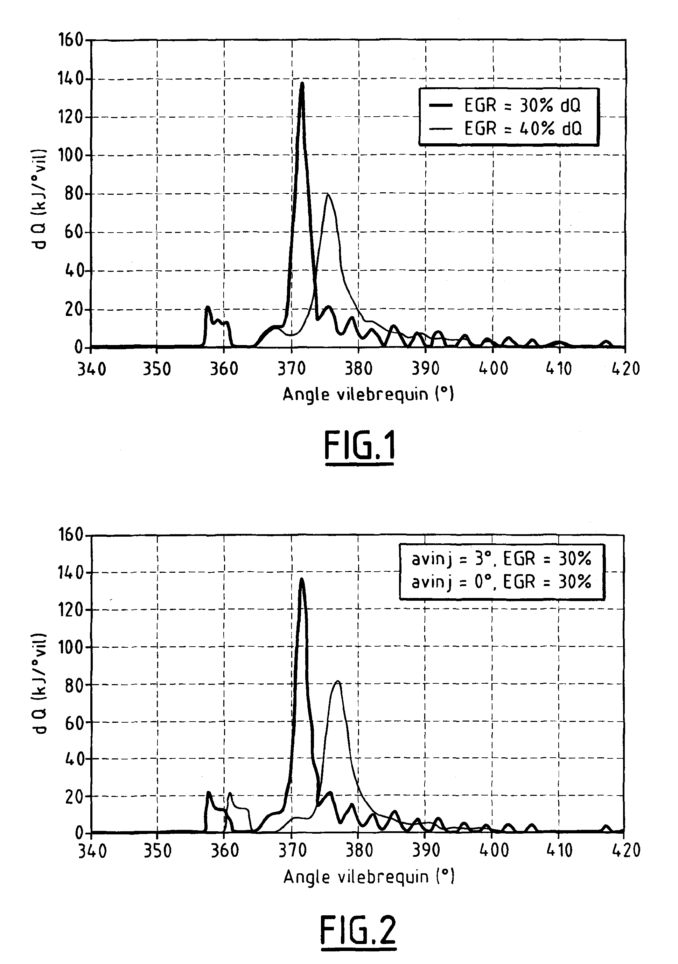

Sur la figure 1, un premier et un second dégagements de chaleur provoqués par la combustion de carburant dans un cylindre d'un moteur Diesel de véhicule automobile équipé de moyens de recirculation des gaz d'échappement en entrée de celui-ci, sont tracés en fonction de l'angle vilebrequin du cylindre.

Le premier dégagement de chaleur, en trait fin, correspond à un taux nominal de recirculation des gaz d'échappement. Le second dégagement, en trait gras, correspond à un taux de recirculation non nominal. Dans ce dernier cas, le taux nominal n'a pas été atteint du fait de dérives dans le fonctionnement du moteur, comme l'encrassement de la vanne EGR présente dans les moyens de recirculation, ou du fait d'une transition trop rapide dans le fonctionnement du moteur, comme une demande d'augmentation rapide du couple, qui n'a pas permis aux moyens de recirculation d'atteindre le niveau nominal de taux de recirculation en raison de leurs dynamiques trop lentes.

On observe une différence notable entre ces deux dégagements qui se traduit par une dégradation des émissions de polluants par le moteur et du bruit de combustion de celui-ci.

Sur la figure 2, on a tracé en trait gras le second dégagement de chaleur et en trait fin un troisième dégagement de chaleur correspondant au taux non nominal de recirculation et à un déphasage de l'injection de carburant dans le cylindre par rapport au phasage nominal de celle-ci, et plus particulièrement à une augmentation de l'avance de l'injection de carburant dans le cylindre.

Comme on peut le constater à la vue des figures 1 et 2, les premier et troisième dégagements de chaleur sont sensiblement égaux. Il est donc possible de maintenir, par modification de la loi d'injection de carburant dans le cylindre, les niveaux requis d'émission de polluants et de bruit de combustion en présence de dérives dans le fonctionnement du moteur et de transitions rapides de celui-ci.

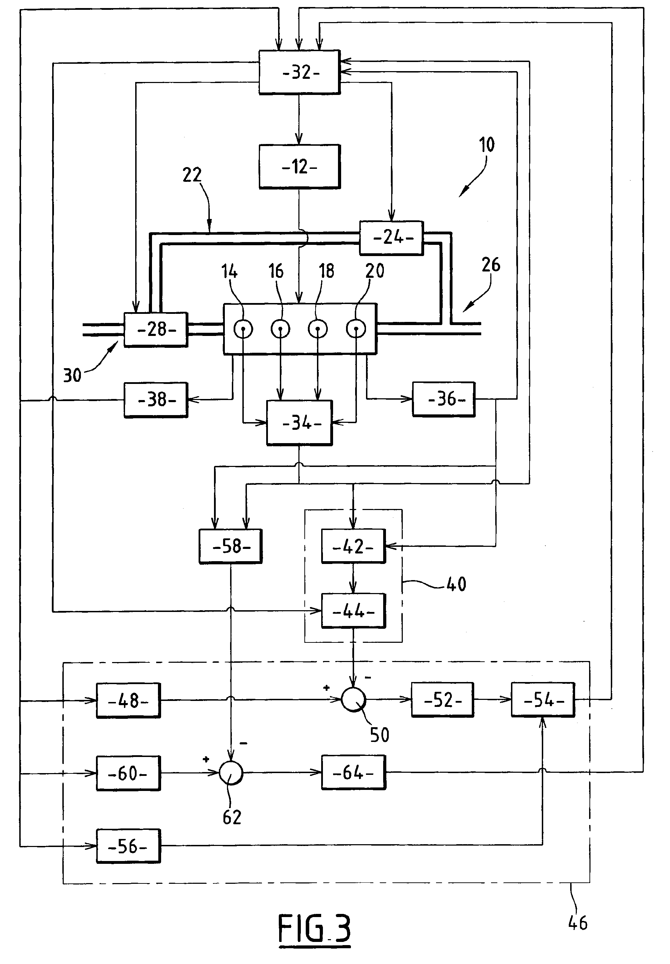

La figure 3 est une vue schématique d'un système selon l'invention se fondant sur le principe énoncé ci-dessus.

Ce système est associé à un moteur 10 de véhicule automobile équipé de moyens 12 d'alimentation des cylindres 14, 16, 18, 20 de celui-ci, dans cet exemple au nombre de 4. Les moyens 12 comportent une rampe commune d'alimentation (non représentée) et sont adaptés pour alimenter les cylindres du moteur selon des injections multiples de carburant, comme par exemple une injection pilote et une injection principale.

Le moteur 10 est également équipé de moyens 22 de recirculation des gaz d'échappement en entrée de celui-ci. Ces moyens 22 sont propres à prélever au moyen d'une vanne EGR 24 une partie des gaz d'échappement d'une ligne d'échappement 26 et a délivrer celle-ci à des moyens 28 d'admission d'un mélange air/gaz d'échappement en entrée du moteur 10 qui reçoivent par ailleurs de l'air par une entrée d'air 30.

Le fonctionnement du moteur et des organes venant d'être décrits est piloté par une unité de contrôle 32 en fonction d'informations relatives au fonctionnement du moteur. Le pilotage par l'unité 32 est réalisé à partir d'une première loi prédéterminée de pilotage de l'injection de carburant dans les cylindres et d'une seconde loi prédéterminée de pilotage de l'admission du mélange air/gaz d'échappement en entrée du moteur.

Plus particulièrement, l'unité 32 de contrôle est propre à piloter le moteur et ses organes associés en fonction d'informations délivrées par :

- des moyens 32 d'acquisition de la pression dans chaque cylindre du moteur ;
- des moyens 36 d'acquisition de l'angle vilebrequin de chaque cylindre ;
- des moyens 38 d'acquisition du point de fonctionnement du moteur utilisé par l'unité 32 pour le pilotage des moyens 12, 22 d'alimentation et de recirculation, comme le régime de rotation du moteur, le couple moteur demandé par le conducteur et la pression dans la rampe commune d'alimentation.

L'unité 32 est notamment adaptée pour piloter les paramètres de l'injection de carburant dans chaque cylindre, en particulier l'angle d'avance, le débit et la durée de l'injection de carburant dans le cylindre, comme cela est connu en soi dans l'état de la technique.

Le système selon l'invention est adapté pour corriger la première loi de pilotage de l'injection afin d'obtenir tout au long de la vie du véhicule des niveaux nominaux d'émission de polluants et de bruit de combustion malgré la présence de dérives dans le fonctionnement dans le moteur et de transitoires rapides de celui-ci.

A cet effet, le système comprend des moyens 40 connectés aux moyens 36, 38 d'acquisition de la pression dans chaque cylindre du moteur et de l'angle vilebrequin de ceux-ci et adaptés pour déterminer en fonction des pressions et des angles acquis une grandeur relative au phasage de la combustion du carburant dans chaque cylindre et pour chaque cycle de ce cylindre.

Les moyens 40 comprennent des moyens 44 de calcul du dégagement de chaleur provoqué par la combustion du carburant injecté dans le cylindre pour le cycle courant par exemple à partir de la relation :

$$\frac{dQ}{d\alpha}(n \times d\alpha) = \frac{1}{k-1}\left( V(n \times d\alpha).\frac{dP}{d\alpha}(n \times d\alpha) - k.P(n \times d\alpha).\frac{dV}{d\alpha}(n \times d\alpha) \right)$$

où $d\alpha$ est un pas prédéterminé d'angle vilebrequin d'échantillonnage, n un entier, $dQ(n \times d\alpha)$ est la quantité de chaleur instantanée dégagée à l'angle d'échantillonnage $n \times d\alpha$ par la combustion du mélange entre l'angle nxda et l'angle (n+1) $\times d\alpha$ , $V(n \times d\alpha)$ et $P(n \times d\alpha)$ sont le volume de la chambre de combustion du cylindre et la pression dans celle-ci à l'angle d'échantillonnage $n \times d\alpha$ respectivement, $dV(n \times d\alpha)$ et $dP(n \times d\alpha)$ sont les variations du volume de la chambre de combustion et de la pression dans celle-ci entre l'angle $n \times d\alpha$ et l'angle (n+1) $\times d\alpha$, et k un coefficient polytropique prédéterminé sensiblement égal à 1,34.

Ce calcul est effectué sur une plage prédéterminée d'angles vilebrequin $[\alpha_{min}, \alpha_{max}]$ comprenant une partie des phases de compression et de combustion du cycle de cylindre, par exemple la plage [-90, 90] degrés vilebrequin.

Un exemple du calcul du dégagement de chaleur à partir de la relation précédente est décrit dans les demandes françaises n° 2 838 775 et n° 2 846 373 au nom de la demanderesse.

Les moyens 40 comprennent également des moyens 44 connectés aux moyens 42 et à l'unité 32 et adaptés pour calculer, en fonction du dégagement de chaleur délivré par les moyens 42, un angle vilebrequin $CA_X$ correspondant à une fraction prédéterminée X de la quantité totale de carburant brûlé dans le cylindre pour le cycle courant.

Par exemple, les moyens 44 sont adaptés pour calculer l'angle vilebrequin correspondant à 5% de la quantité totale de carburant brûlé, c'est-à-dire l'angle vilebrequin de début de combustion, 25% de ladite quantité, 50% de ladite quantité, c'est-à-dire l'angle vilebrequin moyen de la combustion, 75% de ladite quantité ou 90% de ladite quantité, c'est-à-dire l'angle vilebrequin de fin de la combustion.

Les moyens 44 sont par exemple propres à calculer le dégagement de chaleur cumulé M sur la plage d'angles $[\alpha_{min}, \alpha_{max}]$, c'est-à-dire le dégagement cumulé M selon la relation $M = \sum_{i=0}^{N} dQ(\alpha_{min} + i \times d\alpha)$, où N est une partie entière de $\dfrac{\alpha_{max} - \alpha_{min}}{d\alpha}$ , et à calculer l'angle $CA_x$ comme étant l'angle vilebrequin $\alpha_{min} + N_X \times d\alpha$, où $N_x$ est un entier vérifiant la relation suivante :

$$\frac{\sum\limits_{n=0}^{N_X} dQ(\alpha_{min} + n \times d\alpha)}{M} = X$$

Le système selon l'invention comprend également des moyens 46 connectés aux moyens 40 et adaptés pour corriger la première loi de pilotage de l'injection en fonction de l'angle vilebrequin $CA_x$ déterminé.

Les moyens 46 comprennent des premiers moyens 48 formant cartographie connectés aux moyens d'acquisition 38 et propres à délivrer en fonction du point de fonctionnement acquis du moteur une consigne pour l'angle vilebrequin $CA_x$ à partir d'une cartographie prédéterminée d'angles.

Des moyens 50, 52 d'asservissement, connectés aux moyens 48, comprennent un soustracteur 50 formant l'erreur $\varepsilon_{CA_x}$ entre la consigne délivrée par les moyens 48 et l'angle $CA_x$ et délivrant celle-ci à des moyens 52 mettant en oeuvre une loi d'asservissement, par exemple une loi du type proportionnel-intégral-dérivé (PID) dont les paramètres sont tabulés en fonction d'un nombre prédéterminé de points de fonctionnement du moteur.

Les moyens 52 d'asservissement sont propres à calculer, lorsque l'erreur $\varepsilon_{CA_x}$ est supérieure en valeur absolue à une valeur $S_{CA_x}$ prédéterminée de seuil, par exemple égale à 0,5 degré, un signal de correction de la loi de pilotage de l'injection en fonction de l'erreur $\varepsilon_{CA_x}$. Plus particulièrement, les moyens 52 sont propres à calculer un angle $Offset_{CA_x}$ de correction de l'angle d'avance de l'injection de carburant dans le cylindre de la loi de pilotage de l'injection.

Les moyens 52 sont par ailleurs connectés à des moyens 54 propres à borner l'angle $Offset_{CA_x}$ de correction dans une plage [Avmin,Avmax] prédéterminée de valeurs d'angles d'avance.

La plage [Avmin,Avmax] de valeurs d'angles d'avance est représentative d'une émission non dégradée de polluants par le moteur et d'une stabilité non dégradée de la combustion du carburant dans le cylindre. Elle est délivrée par des seconds moyens 56 formant cartographie connectés aux moyens 54 de bornage. Les seconds moyens 56 sont connectés aux moyens 38 d'acquisition du point de fonctionnement du moteur et sont propres à déterminer la plage [Avmin, Avmax] en fonction du point acquis à partir d'une cartographie prédéterminée de plages d'angles d'avance.

Les moyens 54 sont connectés à l'unité 32 et lui délivrent l'angle $Offset_{CA_x}$ de correction borné. L'unité 32 corrige alors l'angle d'avance calculé selon la loi de pilotage de l'injection en ajoutant à ce dernier l'angle $Offset_{CA_x}$ de correction borné. L'unité 32 commande alors les moyens 12 d'alimentation en fonction de l'angle d'avance corrigé. L'angle $CA_x$ est alors sensiblement égal à sa consigne, le dégagement de chaleur étant ainsi recalé sur le dégagement de chaleur nominal qui devrait normalement avoir lieu si il n'y avait pas de dérives de fonctionnement et de transitions rapides dans le fonctionnement du moteur.

On sait également que la modification de l'angle d'avance peut avoir pour effet de modifier le rendement énergétique de la combustion et donc le couple moteur.

Le système selon l'invention comprend donc des moyens 58, 60, 62, 64 de modification du débit de carburant injecté dans le cylindre calculé selon la loi de pilotage de l'injection de l'unité 32 pour maintenir un rendement optimal de la combustion.

Ces moyens de modification comprennent des moyens 58 connectés aux moyens 34, 36 d'acquisition de la pression dans le cylindre et de l'angle vilebrequin de celui-ci et propres à déterminer la pression moyenne indiquée des portions du cycle du cylindre à haute pression et à basse pression, ou pression PMI, en fonction des entrées qu'ils reçoivent.

Les moyens 58 sont propres à déterminer la pression PMI à partir de la relation :

$$PMI = \int_{HP+BP} P.dV$$

où HP et BP sont des portions prédéterminées à haute pression et à basse pression du cycle du cylindre respectivement.

Par exemple, les moyens 58 déterminent la pression PMI du cylindre sur l'ensemble du cycle du cylindre selon la relation :

$$PMI = \sum_{i=0}^{720°/d\alpha} P(-360° + i \times d\alpha) \times dV(-360° + i \times d\alpha)$$

En variante, les moyens 58 sont propres à déterminer la pression moyenne indiquée PMI uniquement d'une portion du cycle de cylindre à haute pression selon la relation :

$$PMI = \sum_{i=0}^{R_{HP}} P(\alpha_{min}^{HP} + i \times d\alpha) \times dV(\alpha_{min}^{HP} + i \times d\alpha)$$

où $\left[\alpha_{min}^{HP}, \alpha_{max}^{HP}\right]$ est la portion du cycle du cylindre à haute pression, par exemple sensiblement égale à la plage [-180, 180] degrés vilebrequin, et $R_{HP}$ est une partie entière de $\dfrac{\alpha_{max}^{HP} - \alpha_{min}^{HP}}{d\alpha}$.

En variante, les moyens 58 sont propres à déterminer la pression moyenne indiquée PMI uniquement d'une portion du cycle de cylindre à basse pression selon la relation :

$$PMI = \sum_{i=0}^{R1_{BP}} P(\alpha_{min}^{BP1} + i \times d\alpha) \times dV(\alpha_{min}^{BP1} + i \times d\alpha) + \sum_{j=0}^{R2_{BP}} P(\alpha_{min}^{BP2} + j \times d\alpha) \times dV(\alpha_{min}^{BP2} + j \times d\alpha)$$

où $\left[\alpha_{min}^{BP1}, \alpha_{max}^{BP1}\right] \cup \left[\alpha_{min}^{BP2}, \alpha_{max}^{BP2}\right]$ est la portion du cycle du cylindre à haute pression, par exemple sensiblement égale à la plage [-360,-180]∪[180,360] degrés vilebrequin, R1$_{BP}$ est une partie entière de $\dfrac{\alpha_{max}^{BP1} - \alpha_{min}^{BP1}}{d\alpha}$, et R2$_{BP}$ est une partie entière de $\dfrac{\alpha_{max}^{BP2} - \alpha_{min}^{BP2}}{d\alpha}$.

Les moyens 46 de correction comprennent des troisièmes moyens 60 formant cartographie connectés aux moyens 38 d'acquisition du point de fonctionnement du moteur et propres à déterminer en fonction du point de fonctionnement acquis une consigne pour la pression PMI à partir d'une cartographie prédéterminée de consignes de pression PMI.

Des moyens 62, 64 d'asservissement de la pression PMI sur la consigne PMI délivrée par les moyens 60 sont également prévus et comprennent un soustracteur 62 formant l'erreur $\varepsilon_{PMI}$ entre cette consigne et la pression déterminée par les moyens 58. Le soustracteur 62 est connecté à des moyens 64 mettant en oeuvre une loi d'asservissement, par exemple une loi du type PID dont les paramètres sont tabulés en fonction d'un nombre prédéterminé de points de fonctionnement.

Les moyens 64 sont propres à calculer un débit $Offset_{PMI}$ de correction du débit de carburant calculé selon la loi de pilotage de l'injection en fonction de l'erreur $\varepsilon_{PMI}$ délivrée par le soustracteur 62. Les moyens 64 sont connectés à l'unité 32 qui modifie le débit calculé selon la loi de pilotage de l'injection en lui ajoutant le débit $Offset_{PMI}$ de correction reçu et qui commande les moyens 12 d'alimentation en fonction du débit modifié.

La pression PMI du cylindre est ainsi sensiblement égale à sa consigne de pression. Il peut être montré que la pression PMI est directement liée au rendement énergétique de la combustion de sorte que l'asservissement de la pression PMI sur sa consigne a pour effet l'asservissement de ce rendement sur une consigne de rendement correspondante.

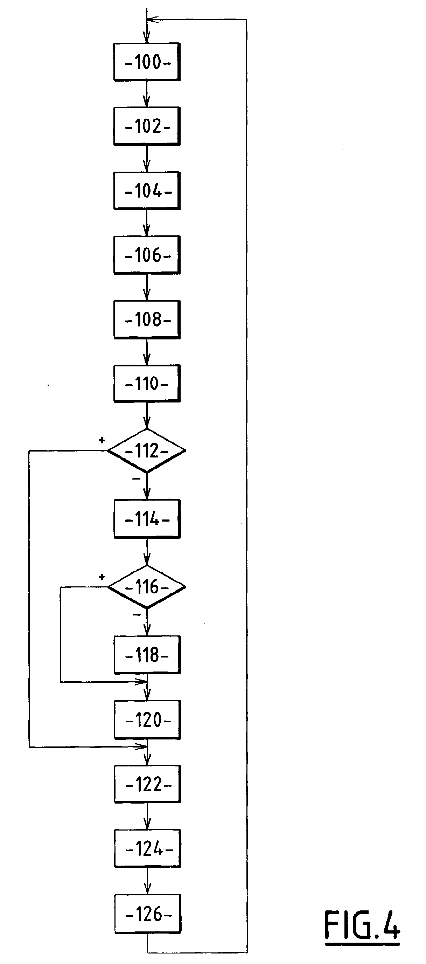

La figure 4 est un organigramme du procédé de contrôle du fonctionnement du moteur Diesel mis en oeuvre par le système décrit précédemment.

Dans une première étape 100 d'acquisition, les différentes grandeurs utilisées pour le contrôle du fonctionnement du moteur, de l'injection et de la recirculation des gaz d'échappement, notamment le régime de rotation du moteur, le couple moteur demandé par le conducteur du véhicule, la pression dans la rampe commune d'alimentation, la pression dans les cylindres et les angles vilebrequin des cylindres, sont acquises pour le cycle moteur courant.

Dans une étape 102, les différents paramètres du fonctionnement, de l'injection et de la recirculation des gaz d'échappement sont calculés pour le cycle moteur courant en fonction des grandeurs acquises en 100 à partir de la loi de pilotage de l'injection et de la loi de pilotage de la recirculation des gaz d'échappement. En 102, notamment les angles d'avance et les débits de l'injection de carburant dans les cylindres sont calculés selon la loi de pilotage de l'injection.

Dans une étape 104 suivante, pour chaque cylindre, les consignes pour l'angle $CA_x$ et la pression PMI ainsi que la plage [Avmin, Avmax] de valeurs d'angles d'avance sont déterminées pour le cycle courant en fonction du point de fonctionnement du moteur acquis en 100.

Ensuite, en 106, la pression dans le cylindre est acquise pour le cycle moteur courant.

En 108, l'angle vilebrequin $CA_x$ correspondant à la fraction X de la quantité totale de carburant brûlé dans le cylindre est déterminé en fonction de la pression acquise dans la plage $[\alpha_{min}, \alpha_{max}]$ de la manière décrite précédemment.

Toujours en 108, la pression PMI moyenne indiquée des portions à haute pression et à basse pression est déterminée en fonction de la pression acquise sur l'ensemble du cycle courant du cylindre, ou la pression PMI moyenne indiquée de la portion à haute pression est déterminée en fonction de la pression acquise dans la plage $\left[\alpha_{min}^{HP}, \alpha_{max}^{HP}\right]$ du cycle courant du cylindre, ou la pression MPI moyenne indiquée de la portion à basse pression est déterminée en fonction de la pression acquise dans la plage $\left[\alpha_{min}^{BP1}, \alpha_{max}^{BP1}\right] \cup \left[\alpha_{min}^{BP2}, \alpha_{max}^{BP2}\right]$ du cycle courant du cylindre, de la manière décrite précédemment.

L'erreur $\varepsilon_{CA_x}$ entre la consigne pour l'angle $CA_X$ et l'angle $CA_X$ déterminé en 108 et l'erreur $\varepsilon_{PMI}$ entre la consigne pour la pression PMI et la pression PMI déterminée en 108 sont alors calculées en 110.

Dans une étape 112, un test est mis en oeuvre pour savoir si la valeur absolue de l'erreur $\varepsilon_{CA_x}$ est inférieure ou égale à la valeur de seuil $S_{CA_x}$. Si le résultat de ce test est négatif, un angle $Offset_{CA_x}$ de correction de l'angle d'avance de l'injection dans le cylindre déterminé en 102 est calculé en 114 en fonction de l'erreur $\varepsilon_{CA_x}$ à partir de la loi d'asservissement de l'angle $CA_x$.

Un test est ensuite réalisé en 116 pour savoir si l'angle $Offset_{CA_x}$ de correction de l'angle d'avance est compris dans la plage [Avmin,Avmax]. Si tel n'est pas le cas, l'angle $Offset_{CA_x}$ de correction est alors borné en 118 dans cette plage. Plus particulièrement si $Offset_{CA_x} < $ Avmin alors $Offset_{CA_x} = $ Avmin et si $Offset_{CA_x} > $ Avmax alors $Offset_{CA_x} = $ Avmax.

En 120, l'angle d'avance de l'injection dans le cylindre calculé en 102 est alors corrigé en lui additionnant l'angle $Offset_{CA_x}$ de correction.

Si le résultat du test réalisé en 116 est positif, c'est-à-dire que l'angle $Offset_{CA_x}$ de correction est borné dans la plage [Avmin, Avmax], alors l'étape 120 est déclenchée et l'angle d'avance calculé en 102 corrigé en fonction de l'angle $Offset_{CA_x}$ de correction.

Si le résultat du test en 112 est positif, c'est-à-dire que la valeur absolue de l'erreur $\varepsilon_{CA_x}$ est inférieure ou égale à $S_{CA_x}$, aucune correction de l'angle d'avance calculé en 102 n'est réalisée. Une étape 122 suivante est alors déclenchée.

L'étape 122, également déclenchée à la suite de l'étape 120, consiste à calculer le débit Offset$_{PMI}$ de correction en fonction de l'erreur $\varepsilon_{PMI}$ à partir de la loi d'asservissement de la pression PMI. Dans une étape 124 suivante, le débit de carburant dans le cylindre calculé en 102 est alors corrigé en lui additionnant le débit Offset$_{PMI}$ de correction.

L'injection de carburant dans les cylindres est alors pilotée en 126 en fonction de la loi de pilotage ainsi corrigée pour chaque cylindre.

L'étape 126 boucle alors sur l'étape 100 pour un nouveau cycle de correction de la loi de pilotage de l'injection pour le cycle moteur suivant.

Il a été décrit un mode de réalisation de l'invention dans lequel la correction de la loi de pilotage de l'injection est réalisée pour chaque cylindre du moteur en fonction de la pression de celui-ci. En variante, cette correction est calculée en fonction de la pression dans un seul cylindre et est appliquée pour l'ensemble des cylindres. Ceci peut par exemple être le cas lorsqu'un seul cylindre est associé à des moyens d'acquisition de pression.

De même, il a été décrit une correction de la loi de pilotage de l'injection par l'asservissement de l'angle vilebrequin $CA_x$ correspondant à une fraction prédéterminée de la quantité de carburant injectée qui a été brûlé dans un cylindre afin de recaler le dégagement de chaleur sur un dégagement de chaleur nominal.

En variante, d'autres types de grandeurs relatives au phasage de l'injection et d'asservissements sont utilisés, par exemple :

- l'angle vilebrequin correspondant au maximum de chaleur dégagée lors de la combustion du carburant dans le cylindre ;
- le délai d'auto-inflammation du carburant dans le cylindre, c'est-à-dire le délai entre le début de l'injection et le début de la combustion ; ou
- l'angle vilebrequin correspondant au maximum du gradient de pression dans le cylindre.

Le système et le procédé décrits précédemment sont alors modifiés en fonction de la grandeur utilisée.

De même, d'autres types de paramètres de l'injection sont possibles. Par exemple, en variante, plutôt que corriger l'angle d'avance de l'injection, la pression du carburant injecté dans le cylindre est corrigée.

Enfin, il a été décrit une commande du rendement énergétique de la combustion par asservissement de la pression moyenne indiquée. En variante la commande du rendement énergétique est réalisée en boucle ouverte en fonction de la quantité de correction de la loi de pilotage de l'injection déterminée en fonction de la grandeur relative au phasage de la combustion. Par exemple, en variante, le débit de carburant est incrémenté d'une quantité prédéterminée pour chaque incrément d'angle d'avance déterminé pour la correction de l'angle d'avance calculé selon la loi de pilotage de l'injection.

**Revendications**

1. Système de contrôle du fonctionnement d'un moteur Diesel (10) de véhicule automobile équipé de moyens (12) d'alimentation en carburant des cylindres de celui-ci et de moyens (22) de recirculation des gaz d'échappement en entrée de celui-ci, du type comprenant une chaîne (34,36) d'acquisition de la pression dans au moins un cylindre du moteur et de l'angle vilebrequin de celui-ci et des moyens (32) de pilotage des moyens (12) d'alimentation en fonction d'une loi prédéterminée d'injection de carburant dans le au moins un cylindre, **caractérisé en ce qu'**il comprend :

   - des moyens (40) de détermination d'une grandeur relative au phasage de la combustion du carburant dans le au moins un cylindre en fonction de la pression et de l'angle vilebrequin acquis ; et
   - des moyens (46) de correction de la loi d'injection en fonction de la grandeur déterminée afin de maintenir un niveau nominal de bruit de combustion dans le moteur et d'émission de polluants par celui-ci.

2. Système selon la revendication 1, **caractérisé en ce que** les moyens (40) de détermination de la grandeur relative au phasage de la combustion sont adaptés pour déterminer un angle vilebrequin du au moins un cylindre correspondant à une fraction prédéterminée de la quantité totale de carburant brûlé par cycle dans celui-ci en fonction de la pression et de l'angle vilebrequin acquis.

3. Système selon la revendication 2, **caractérisé en ce que** la fraction prédéterminée est sélectionnée dans le groupe consistant en 5%, 25%, 50%, 75% et 90% de la quantité totale de carburant brûlé par cycle dans le au moins un cylindre.

**4.** Système selon la revendication 2 ou 3, **caractérisé en ce que** les moyens (40) de détermination de la grandeur relative au phasage de la combustion comprennent des moyens (42) de calcul du dégagement de chaleur provoqué par la combustion du carburant dans le au moins un cylindre en fonction de la pression et de l'angle vilebrequin acquis et des moyens de calcul (44) de la fraction de la quantité totale de carburant brûlé en fonction du dégagement de chaleur calculé.

**5.** Système selon la revendication 1, **caractérisé en ce que** les moyens (40) de détermination de la grandeur relative au phasage de la combustion sont adaptés pour déterminer l'angle vilebrequin du au moins un cylindre correspondant au maximum de chaleur dégagée lors de la combustion du carburant dans le au moins cylindre.

**6.** Système selon la revendication 1, **caractérisé en ce que** les moyens (40) de détermination de la grandeur relative au phasage de la combustion sont adaptés pour déterminer le délai d'auto-inflammation du carburant dans le au moins cylindre.

**7.** Système selon la revendication 1, **caractérisé en ce que** les moyens (40) de détermination de la grandeur relative au phasage de la combustion sont adaptés pour déterminer l'angle vilebrequin du au moins un cylindre correspondant au maximum du gradient de pression dans celui-ci.

**8.** Système selon l'une quelconque des revendications précédentes, **caractérisé en ce que** les moyens (46) de correction de la loi d'injection sont adaptés pour corriger le phasage de l'injection de carburant dans le au moins un cylindre.

**9.** Système selon l'une quelconque des revendications 1 à 7, **caractérisé en ce que** les moyens (46) de correction de la loi d'injection sont adaptés pour corriger la pression de carburant injecté dans le au moins un cylindre.

**10.** Système selon quelconque des revendications précédentes, **caractérisé en ce que** les moyens (46) de correction comprennent des moyens (48) de délivrance d'une consigne pour ladite grandeur et des moyens (50,52) d'asservissement de ladite grandeur sur sa consigne.

**11.** Système selon la revendication 10, **caractérisé en ce que** les moyens (50,52) d'asservissement comprennent des moyens (52) de commande du type proportionnel-intégral-dérivé.

**12.** Système selon l'une quelconque des revendications précédentes, **caractérisé en ce que** les moyens (46) de correction comprennent des moyens (54) de bornage de la correction de la loi d'injection dans une plage prédéterminée de valeurs représentatives d'une émission non dégradée de polluants par le moteur.

**13.** Système selon l'une quelconque des revendications précédentes, **caractérisé en ce que** les moyens (46) de correction comprennent des moyens (54) de bornage de la correction de la loi d'injection dans une plage prédéterminée de valeurs représentatives d'une stabilité non dégradée de la combustion du carburant dans le au moins un cylindre.

**14.** Système selon l'une quelconque des revendications précédentes, **caractérisé en ce que** les moyens (46) de correction comprennent des moyens (60,62,64) de modification du débit de carburant injecté dans le au moins un cylindre pour maintenir un rendement optimal de la combustion dans le au moins un cylindre.

**15.** Système selon la revendication 14, **caractérisé en ce que** les moyens (60,62,64) de modification du débit comprennent des moyens (62,64) d'asservissement, sur une consigne prédéterminée, de la pression moyenne indiquée d'au moins une portion parmi une portion à haute pression et une portion à basse pression du cycle du au moins un cylindre.

**16.** Système selon la revendication 15, **caractérisé en ce que** la au moins une portion consiste en les portions à haute pression et à basse pression du cycle du au moins un cylindre.

**17.** Système selon la revendication 14, **caractérisé en ce que** les moyens de modification comprennent des moyens d'incrémentation du débit de carburant injecté dans le cylindre en fonction de la correction déterminée en fonction de l'angle vilebrequin correspondant à la fraction de carburant brûlé.

**18.** Procédé de contrôle du fonctionnement d'un moteur Diesel (10) de véhicule automobile équipé de moyens (12) d'alimentation en carburant de ses cylindres, du type comprenant une étape (100) d'acquisition de la pression dans au moins un cylindre du moteur et de l'angle vilebrequin de celui-ci et une étape (102) de détermination de paramètres de pilotage des moyens d'alimentation en fonction d'une loi prédéterminée d'injection de carburant dans le au moins un cylindre, **caractérisé en ce qu'**il comprend :

- une étape (108) de détermination d'une grandeur relative au phasage de la combustion du carburant dans le au moins un cylindre en fonction de la pression et de l'angle vilebrequin acquis ; et
- une étape (120) de correction de la loi d'injection en fonction de la grandeur déterminée afin de maintenir un niveau nominal de bruit de combustion dans le moteur et d'émission de polluants par celui-ci.

## FIG.1

## FIG.2

FIG.3

FIG.4

**Office européen des brevets**

**RAPPORT DE RECHERCHE EUROPEENNE**

Numéro de la demande

EP 06 30 0868

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2005/005813 A (AVL LIST GMBH; NEUNTEUFL, KLEMENS; UNGER, EDUARD; RODUNER, CHRISTIAN) 20 janvier 2005 (2005-01-20) | 1-5, 7-14,17, 18 | INV. F02D41/40 F02D35/02 |
| Y | * abrégé * * page 5, alinéa 5 - page 10, alinéa 3 * * page 12, ligne 2 - page 15, ligne 3 * ----- | 6 | |
| Y | PATENT ABSTRACTS OF JAPAN vol. 011, no. 247 (M-615), 12 août 1987 (1987-08-12) & JP 62 055436 A (TOYOTA MOTOR CORP), 11 mars 1987 (1987-03-11) * abrégé * ----- | 6 | |
| X | DE 10 2004 033072 A1 (ROBERT BOSCH GMBH) 28 juillet 2005 (2005-07-28) | 1-5, 8-10, 12-14, 17,18 | |
| | * abrégé * * alinéas [0002], [0004] - [0006] * * alinéas [0013], [0014], [0016] - [0018] * * alinéas [0020], [0021] * * alinéas [0032] - [0038], [0043] * ----- | | **DOMAINES TECHNIQUES RECHERCHES (IPC)** F02D |
| A | DE 103 16 113 A1 (DAIMLERCHRYSLER AG) 28 octobre 2004 (2004-10-28) * abrégé * * alinéas [0009] - [0017] * ----- | 1-18 | |
| D,A | US 2005/121000 A1 (VERMONT ET AL.) 9 juin 2005 (2005-06-09) * abrégé * * alinéas [0001] - [0036] * ----- -/-- | 1,18 | |

Le présent rapport a été établi pour toutes les revendications

| Lieu de la recherche | Date d'achèvement de la recherche | Examinateur |
|---|---|---|
| Munich | 6 décembre 2006 | Wettemann, Mark |

EPO FORM 1503 03.82 (P04C02)

**Office européen
des brevets**

**RAPPORT DE RECHERCHE EUROPEENNE**

Numéro de la demande

EP 06 30 0868

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| D,A | FR 2 846 373 A (PEUGEOT CITROEN AUTOMOBILES SA; DELPHI TECHNOLOGIES INCORPORATED) 30 avril 2004 (2004-04-30) * abrégé * * page 1, ligne 1 - page 11, ligne 19 * ----- | 1,18 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 6 décembre 2006 | Wettemann, Mark |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

    ........................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 06 30 0868

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-12-2006

| Document brevet cité au rapport de recherche | | Date de publication | Membre(s) de la famille de brevet(s) | | Date de publication |
|---|---|---|---|---|---|
| WO 2005005813 | A | 20-01-2005 | US | 2006169243 A1 | 03-08-2006 |
| JP 62055436 | A | 11-03-1987 | AUCUN | | |
| DE 102004033072 | A1 | 28-07-2005 | AUCUN | | |
| DE 10316113 | A1 | 28-10-2004 | EP | 1611335 A1 | 04-01-2006 |
| | | | WO | 2004090312 A1 | 21-10-2004 |
| | | | JP | 2006522892 T | 05-10-2006 |
| US 2005121000 | A1 | 09-06-2005 | AU | 2003246793 A1 | 27-10-2003 |
| | | | EP | 1499803 A1 | 26-01-2005 |
| | | | FR | 2838775 A1 | 24-10-2003 |
| | | | WO | 03087562 A1 | 23-10-2003 |
| | | | JP | 2005522627 T | 28-07-2005 |
| FR 2846373 | A | 30-04-2004 | AT | 312280 T | 15-12-2005 |
| | | | DE | 60302636 T2 | 19-10-2006 |
| | | | EP | 1429009 A1 | 16-06-2004 |

EPO FORM P0460

**EP 1 760 300 A1**

## RÉFÉRENCES CITÉES DANS LA DESCRIPTION

**Documents brevets cités dans la description**

- FR 2838775

- FR 2846373